Europäisches Patentamt

(19) European Patent Office

Office européen des brevets

(11) Numéro de publication: **0 268 626**
**B1**

(12) **FASCICULE DE BREVET EUROPEEN**

(45) Date de publication du fascicule du brevet: **13.06.90**

(21) Numéro de dépôt: **87903335.5**

(22) Date de dépôt: **20.05.87**

(86) Numéro de dépôt international:
**PCT/FR87/00169**

(87) Numéro de publication internationale:
**WO 87/07211 03.12.87 Gazette 87/27**

(51) Int. Cl.⁵: **B 31 B 1/84, B 65 G 19/22**

(54) **DISPOSITIF DE MISE EN PLACE D'EMBOUTS A TRAVERS UN FILM PERFORE ET FILM PERFORE EQUIPE D'EMBOUTS.**

(30) Priorité: **21.05.86 FR 8607205**

(43) Date de publication de la demande:
**01.06.88 Bulletin 88/22**

(45) Mention de la délivrance du brevet:
**13.06.90 Bulletin 90/24**

(84) Etats contractants désignés:
**AT BE CH DE GB IT LI LU NL SE**

(56) Documents cités:
**EP-A-0 107 474**
**WO-A-86/04545**
**DE-C- 540 602**
**FR-A-1 118 233**
**FR-A-1 291 649**
**FR-A-2 111 021**
**FR-A-2 162 773**
**NL-C- 66 033**

**US-A-1 336 304**
**US-A-1 934 835**
**US-A-2 311 600**
**US-A-2 529 777**
**US-A-3 358 810**
**US-A-3 389 643**
**US-A-3 948 711**
**US-A-45 683 21**

(73) Titulaire: **BAXTER INTERNATIONAL INC. (a Delaware corporation)**
**One Baxter Parkway**
**Deerfield Illinois 60015 (US)**

(72) Inventeur: **SUSINI, Etienne**
**8, chemin de la Vallée**
**F-94440 Villecresnes (FR)**
Inventeur: **SOUBRIER, Pierre**
**62, boulevard Louis Schmidt**
**B-1040 Bruxelles (BE)**

(74) Mandataire: **Fruchard, Guy et al**
**CABINET BOETTCHER 23, rue la Boétie**
**F-75008 Paris (FR)**

Courier Press, Leamington Spa, England.

## Description

La présente invention concerne un dispositif de mise en place d'embouts sur un film perforé. L'invention s'applique notamment, bien que non exclusivement, à la réalisation de poches de perfusion.

On connaît des poches de perfusions souples équipées d'un embout servant à l'introduction d'un produit de traitement dans le liquide contenu dans la poche, ou à la distribution du liquide contenu dans la poche. Ces poches sont à l'heure actuelle généralement réalisées à partir d'un film sur lequel l'embout est soudé au regard d'ouvertures perforées dans le film. Dans les dispositifs existants, les embouts sont soit déposés sur le film à l'aplomb des perforations, soit engagés à travers le film par des moyens de guidage disposés de part et d'autre du film, comme décrit par exemple dans le document U.S.—A—4,568,321.

De tels dispositifs risquent d'entraîner une pollution du film par la chute sur le film de particules résultant de la monoeuvre des moyens de mise en place disposés au-dessus du film. Ces dispositifs ne peuvent donc être utilisés pour la réalisation de poches aseptiques.

Un but de la présente invention est de proposer un dispositif de mise en place d'embouts sur un film perforé ne provoquant pas de pollution du film lors de la mise en place des embouts.

En vue de la réalisation de ce but, on prévoit selon l'invention un dispositif de mise en place d'embouts sur un film perforé disposé de façon sensiblement horizontale, ce dispositif comportant des moyens de transport pour amener les embouts au voisinage du film, des moyens de positionnement pour disposer les embouts à l'aplomb des perforations, et des moyens d'engagement pour pousser les embouts à travers les perforations du film, caractérisé en ce que les moyens de transport comportent une chaîne sans fin disposée en-dessous du film performé et s'étendant transversalement au film perforé, une série de fourche de transport montées en porte à faux par rapport à la chaîne sans fin et des moyens d'entraînement pas à pas des fourches, en ce que les moyens de positionnement comportent un vérin de positionnement disposé parallèlement à l'axe des fourches et un conduit de positionnement vertical ayant une ouverture latérale en regard du vérin de positionnement et une paroi interne épousant partiellement un contour externe des embouts et en ce que les moyens d'engagement comprennent un vérin d'engagement disposé en regard du conduit de positionnement en-dessous de celui-ci et comportant une tige portant une plaque de poussée ayant un contour semblable à la paroi interne du conduit de positionnement.

Ainsi, l'ensemble des organes de mise en place des embouts est diposé en-dessous du film et les particules résultant de la manoeuvre de ces organes tombent par gravité sans polluer le film.

Selon une apect avantageux de l'invention, les moyens d'entraînement pas à pas comprennent un vérin d'entraînement comportant une tige qui supporte un sabot disposé en regard d'un côté des fourches de transport; de préférence, le sabot comporte une portie biseautée sur un bord arrière par rapport à un sens de déplacement de la chaîne et chaque fourche de transport comporte une partie biseautée inverse de la partie biseautée du sabot.

Selon un autre aspect avantageux de l'invention, le dispositif comporte des moyens de détection de fourche adjacents aux moyens de positionnement et des moyens de blocage de la chaîne reliés aux moyens de détection de fourche; de préférence les moyens de blocage comprennent un électro-aimant disposé en regard d'une pièce de blocage en matériau magnétique portée par un pignon de renvoi de la chaîne sans fin, la pièce de blocage étant reliée au pignon de renvoi par l'intermédiaire d'un bague élastique fixée en des points alternés au pignon de renvoi et à la pièce de blocage. Ainsi, pour chaque mouvement de va et vient de la tige d'entraînement, les fourches entraînent les embouts selon un mouvement d'avance pas à pas et les moyens de blocage associés aux moyens de détection permettent un positionnement très précis de l'embout.

D'autres caractéristiques et avantages de l'invention ressortiront encore de la description qui suit d'un mode de réalisation préféré, en liaison avec les dessins annexés parmi lesquels:

la figure 1 est une vue de dessus schématique du dispositif selon l'invention;

la figure 2 est une vue de dessus agrandie, éclatée, d'une partie des moyens d'entraînement,

la figure 3 est une vue en coupe schématique agrandie selon la ligne III—III de la figure 1,

la figure 4 est une vue analogue à celle de la figure 3 pour une position différente des organes,

la figure 5 est une vue en coupe agrandie, selon la ligne V—V de la figure 1;

la figure 6 est une vue partielle en coupe agrandie, selon la ligne VI—VI de la figure 1;

la figure 7 est une vue en coupe agrandie, selon la ligne VII—VII de la figure 1;

la figure 8 est une vue en perspective partielle de l'invention.

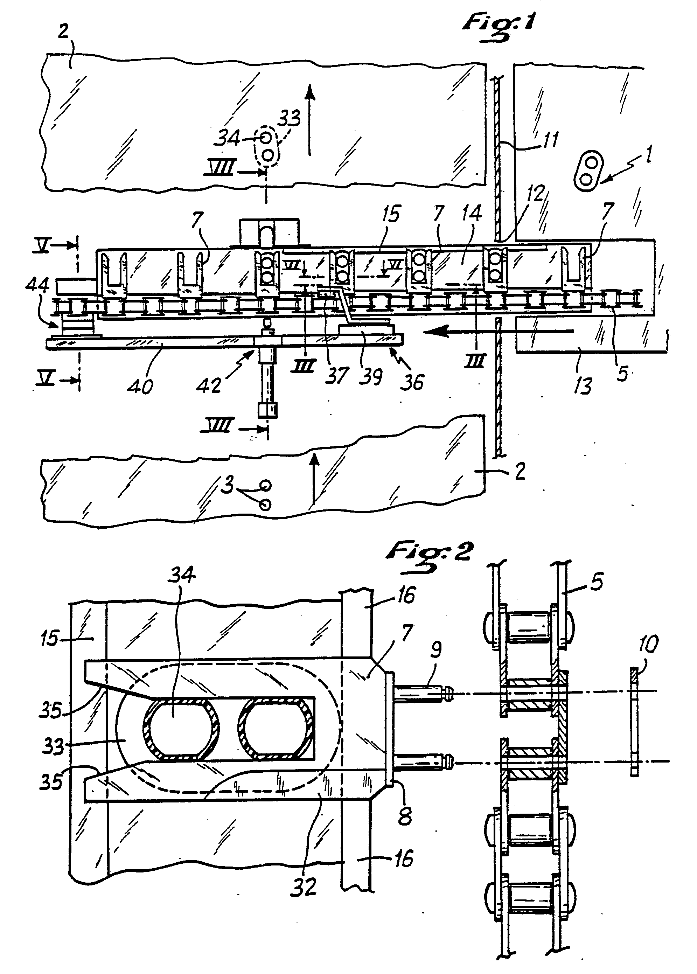

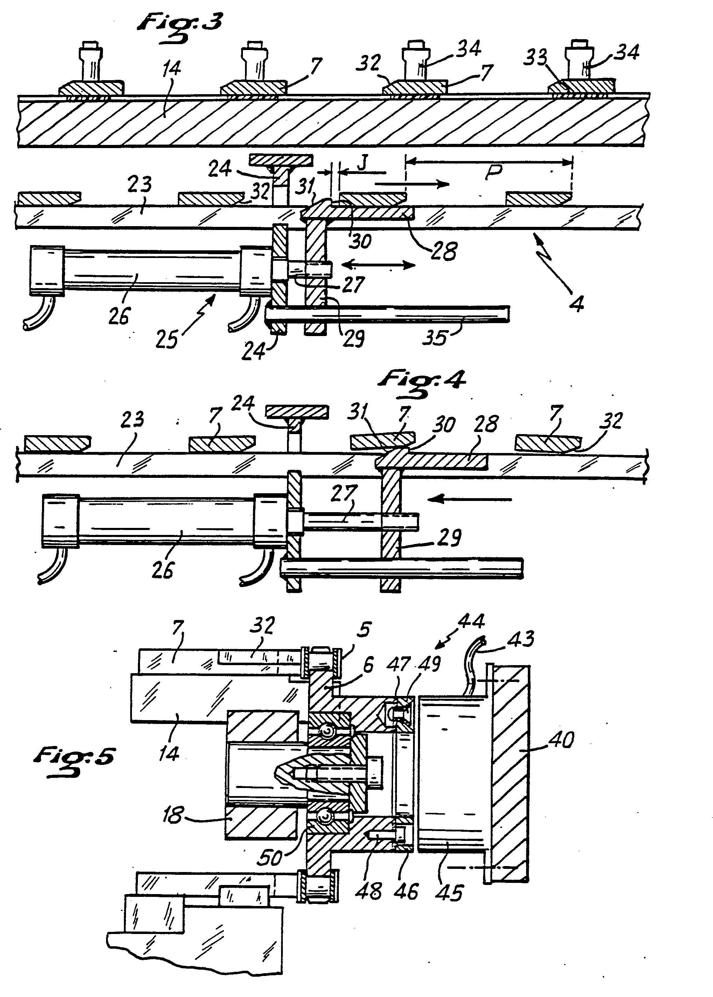

En référence aux figures, le dispositif selon l'invention est destiné à mettre en place des embouts, généralement désignés en 1, sur un film 2, à plat s'étendant horizontalement et comportant des perforations 3. Pour cela, les embouts 1 sont tout d'abord amenés au voisinage du film 2 par des moyens de transport généralement désignés en 4. Dans le mode de réalisation préféré représenté, les moyens de transport 4 comprennent une chaîne sans fin 5 montée pour se déplacer sur des pignons de renvoi 6 et s'étendant en-dessous du film 2, transversalement à celui-ci. Des fourches de transport 7 sont montées en porte à faux sur la chaîne sans fin 5. On voit en détail sur la figure 2 que chaque fourche 7 est soudée à une attache rapide 8 comportant des broches 9 qui remplacent les axes d'un maillon de la chaîne 5 et sont maintenues en place par un clip 10. Ainsi, les fourches 7 ne gênent pas la rotation de la chaîne 5 sur les pignons de renvoi 6.

Dans le mode de réalisation représenté, la machine de traitement du film 2 comporte une paroi latérale 11 ayant une ouverture 12 à travers laquelle passe la chaîne 5 et les fourches 7 associées. A une extrémité d'alimentation, les moyens de transport sont entourés par une table d'alimentation 13 sur laquelle les embouts 1 sont stockés avant d'être introduits manuellement entre les branches des fourches 7. En-dessous des fourches 7, les moyens de transport comportent un raile de guidage 14 dont un des bords support le brin supérieur de la chaîne 5 et qui comporte également sur sa surface supérieure des rebords en saillie 15 et 16 sur lesquels reposent respectivement, d'une part l'extrémité des branches de fourche et, d'autre part, la partie de liaison des fourches. Le rebord 15 est interrompu au voisinage de l'extrémité d'alimentation et au voisinage du milieu du film pour permettre le chargement des embouts 1 sur les fourches 7 et leur déchargement à partir de cellesci, comme il sera vu plus loin à propos du fonctionnement. Le raile de guidage 14 est relié au châssis 17 de la machine (figure 7) par une série de poutrelles et d'entretoises 18, 19, 20, 21, l'ensemble étant rigidifié par une poutrelle tubulaire de section carrée 22.

Le brin inférieur de moyens de transport 4 est supporté par un rail support 23 sur lequel repose l'extrémité des branches des fourches 7. Le rail support 23 peut comporter un revêtement de glissement (non représenté) et est lui-même fixé au châssis 17 par une console 24.

Les fourches 7 sont déplacées par des moyens d'entraînement pas à pas généralement désignés en 25 et comprenant un vérin d'entraînement à double effet 26, de préférence un vérin pneumatique, relié de façon conventionnelle à une source de fluide sous pression (non représentée). Le vérin 26 est fixé à la console 24 et comporte une tige 27 s'étendant parallèlement au rail support 23. La tige 27 suporte à son extrémité libre un sabot 28 relié à la tige 27 par une plaque 29. Le sabot 28 s'étend ainsi, par un épaulement 30, en regard d'un côté des fourches de transport 7. Le mouvement du sabot est guidé par une tige de guidage 35 fixée dans la console 24 et passant à travers une ouverture de la plaque 29. Sur son bord arrière, par rapport au sens de déplacement du brin inférieur des moyens de transport, le sabot 28 comporte une partie biseautée 31 qui coïncide avec une partie biseautée inverse 32 sur le bord avant des fourches de transport 7.

Le fonctionnement des moyens de transport 4 est le suivant: les embouts 1 sont mis en place à l'extrémité d'alimentation adjacente à la table d'alimentation 13 en engageant l'embase 33 des embouts 1 sous une fourche 7, tandis que les organes tubulaires 34, ici au nombre de deux, qui sont réalisés en une seule pièce avec l'embase, s'étendent verticalement vers le haut entre les branches de la fourche 7. On remarque que l'introduction de l'embout 1 est facilité par le jeu qui existe sous la fourche 7, puisque celle-ci repose sur le rebord 16, et par des chamfreins 35 sur les branches de la fourche 7. Dans cette position, l'embase 33 repose sur le rail de guidage 14. Le vérin 26 est alors monoeuvré selon un mouvement de va et vient. Pour chaque extension de la tige de vérin 27, l'épaulement 30 du sabot 28 prend appui sur un côté d'une fourche 7 du brin inférieur et pousse celle-ci d'un pas vers l'avant. L'embout 1 qui vient d'être introduit dans un fourche se déplace alors sur le raile de guidage 14 et est maintenu dans la fourche par le rebord 15. Lors d'un mouvement de rétraction de la tige de vérin 27, la partie biseautée 31 du sabot 28 s'engage sous la partie biseautée 32 de la fourche 7 immédiatement adjacente et soulève celle-ci tant en raison de la flexibilité de la chaîne 5 qu'en raison de la légère torsion qu'elle peut accepter. A ce propos on remarque que la tige du vérin 26 doit se déplacer selon une amplitude égale à la somme du pas P entre deux fourches et du jeu J qui résulte de la flexibilité de la chaîne. Il est certes possible de maintenir le jeu J constant en effectuant des réglages périodiques au moyen d'un tendeur de chaîne de structure classique (non représenté). Cependant, selon un aspect de l'invention, on a recherché des moyens plus précis pour déterminer l'arrêt de l'avance des fourches. Selon le mode de réalisation illustré, ces moyens comprennent des moyens de détection de fourche 36 associés à des moyens de blocage de la chaîne.

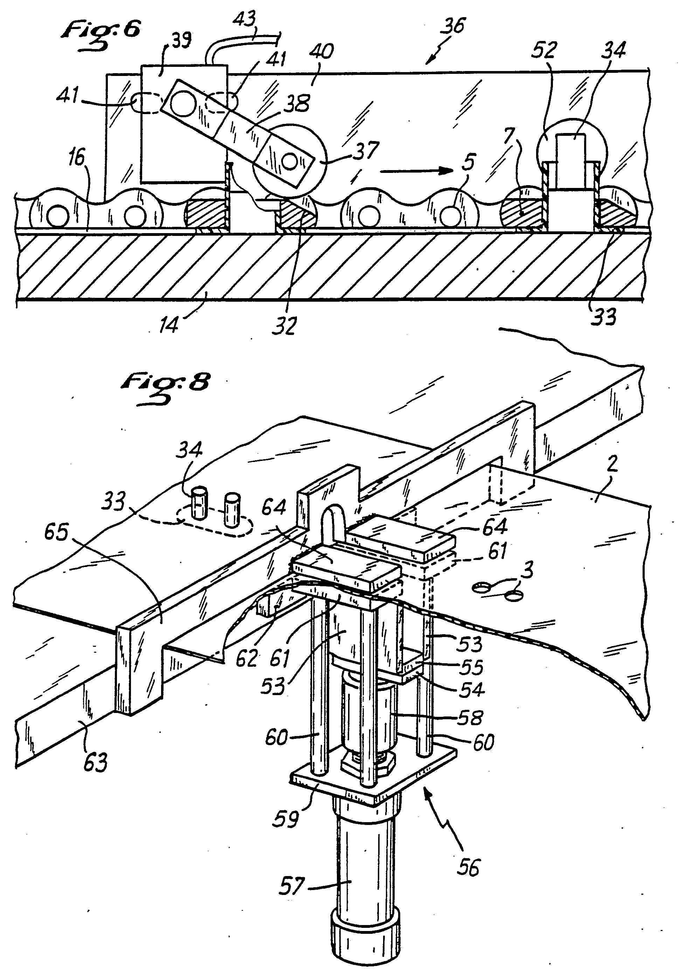

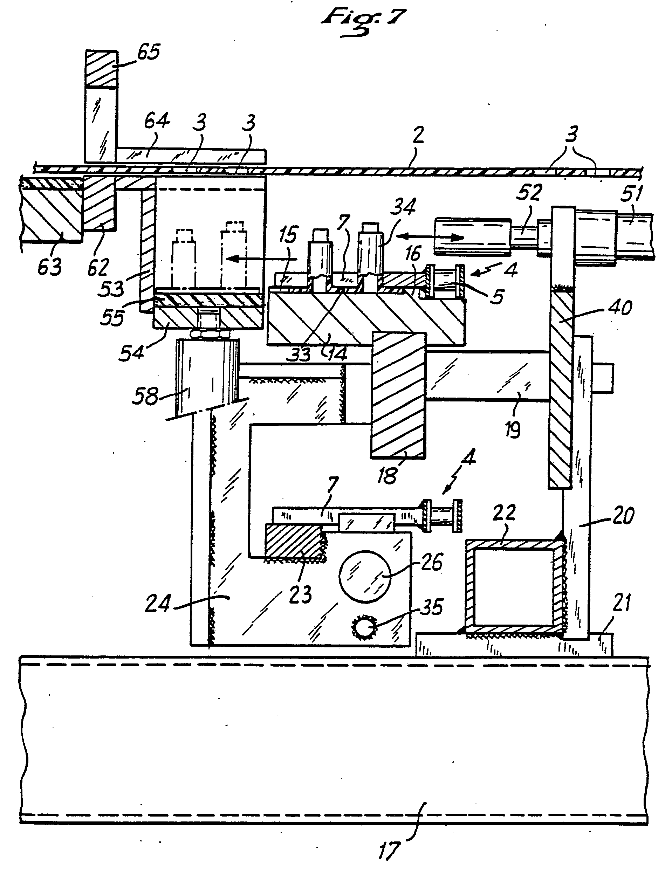

Les moyens de détection de fourche 36 sont du type conventionnel et comprennent une roulette 37 fixée pour tourner à l'extrémité d'un bras 38 lui-même monté pivotant sur un boîtier de détection 39 contenant un contact commandé par les mouvements du bras 38. Le boîtier 39 est fixé sur une plaque 40 elle-même fixée à la plaque 20 (figure 7) solidaire du châssis. La position précise du détecteur est réglée de façon classique, par exemple au moyen de boulons passant dans des lumières allongées 41 de la plaque 40. Les moyens de détection 36 sont disposés adjacents à des moyens de positionnement généralement désignés en 42 et dont la structure détaillée sera décrite plus loin. Ce boîtier de détection 39 est relié par un câble 43 à des moyens de blocage de chaîne généralement désignés en 44 et représentés en détial sur la figure 5.

Les moyens de blocage 44 comprennent un électroaimant 45 fixé sur la plaque 40 en revard d'une pièce de blocage annulaire 46 en matériau magnétique. La pièce de blocage 46 est portée par le pignon de renvoi 6 et est reliée à celui-ci par une bague élastique annulaire 47 fixée en des points alternés le long de la circonférence au pignon de renvoi 6 par des vis 48 et à la pièce de blocage 46 par des rivets 49. Le pignon de renvoi 6 est par ailleurs, monté de façon classique sur un roulement à billes 50; fixé sur la poutrelle 18 supportant le rail de guidage 14.

Les moyens de détection 36 sont disposés pour qu'au moment où une fourche 7 arrive en face des moyens de positionnement 42, la fourche qui est immédiatement en arrière soulève la roulette 37 et active ainsi l'électroaimant 45 pour bloquer le pignon de renvoi 6, et par conséquent le mouvement de la chaîne 5, à l'encontre de l'action du vérin d'entraînement 26.

Comme illustré par la figure 7, les moyens de positionnement 42 comprennent un véfin de positionnement 51, par exemple, un vérin pneumatique à double effet monté sur la plaque 40 en -dessous du film 2 et dont la tige 52 s'étend parallèlement à l'axe des fourches 7 à un niveau correspondant aux organes tubulaires 34. Le vérin 51 est monté de telle façon qu'en position rétractée de la tige de vérin 52, l'extrémité de celle-ci soit sensiblement à l'aplomb des parties de liaison des fourches 7.

En face du vérin de positionnement 51, le dispositif comporte un conduit de positionnement vertical 53 ayant une ouverture latérale en regard de vérin de positionnement et une paroi interne épousant partiellement le contour externe de l'embase 33 des embouts 1. A sa partie inférieure, le conduit de positionnement 53, comprend une plaque de poussée 54 pourvue d'un revêtement de glissement 55. La plaque de poussée 54 a de préférence un contour semblable à la paroi interne du conduit de positionnement 53. Lorsqu'un embout 1 a été amené en face du vérin de positionnement 51, celui-ci est actionné selon un mouvement de va et vient et l'extrémité de la tige 52 pousse sur l'un des organies tubulaires 34 pour dégager l'embout de la fourche et pousser celui-ci dans le conduit de positionnement 53. L'embout 1 est guidé par les parois latérales du conduit de positionnement 53 et vient en butée contre la paroi interne. Dans cette position, les organes tubulaires 34 des embouts 1 sont en alignement avec des perforations 3 dans le film 2 en-dessous de celui-ci, le film ayant été mis en place par ailleurs par des moyens non représentés.

Des moyens d'engagement, généralement désignés en 56, sont disposés en-dessous du conduit de positionnement 53. Ces moyens d'engagement 56 comprennent un vérin d'engagement 57 (figure 8) disposé en regard du conduit de positionnement 53, en-dessous de celui-ci, et comportant une tige 58 portant la plaque de poussée 54. Le vérin d'engagement 57 est porté par une plaque 59 elle-même montée à la partie inférieure de colonnes 60 encadrant le conduit de positionnement 53 et dont l'extrémité supérieure est fixée sur les ailes 61 d'une console 62 fixée sur le côté d'une plaque 63 solidaire du châssis de la machine.

Lorsque'un embout 1 a été mis en place dans le conduit de positionnement 53, le vérin 57 est actionné selon un mouvement de va et vient et la plaque de poussée 54 monte pour engager les organes tubulaires 34 dans les perforations 3, de sorte qu'en aval du dispositif de mise en place des embouts 1, l'embase 33 est disposée contre le film d'un côté de celui-ci et les organes tubulaires 34 font saillie sur un côté du film opposé à l'embase. La machine comporte de préférence des moyens séquentiels pour avancer le film 2 au-dessus de la plaque 63 avant que le plaque de poussée 54 ne redescende en position de réception de l'embout suivant. On évite ainsi une chute de l'embout.

Afin d'éviter que le film ne sout soulevé au moment de l'engagement des organes tubulaires 34, si ceux-ci ne sont pas exactement dans l'axe des perforations 3, on prévoit avantageusement des organes de maintien de film formés par des ailes 64 disposées au-dessus du film de part est d'autre de l'extrémité supérieure du conduit de positionnement 53. Dans le mode de réalisation illustré, les ailes 64 sont fixées sur un étrier 65 servant de guide-film et lui-même fixé sur le côté de la plaque 63.

Bien entendu, l'invention n'est pas limitée au mode de réalisation qui vient d'être décrit et on peut y apporter des variantes de réalisation. En particulier, on peut prévoir un dispositif d'introduction automatique des embouts sur les fourches de transport 7.

On pout également remplacer le sabot d'entraînement fixe par un cliquet escamotable monté sur la tige deu vérin d'entraînement 26.

## Revendications

1. Dispositif de mise en place d'embouts (1) sur un film perforé (2) disposé de façon sensiblement horizontale, ce dispositif comportant dès moyens de transport (4) pour amener les embouts (1) au voisinage du film, des moyens de positionnement (42) pour disposer les embouts à l'aplomb des perforations (3), et des moyens d'engagement (56) pour pousser les embouts à travers les perforations (3) du film (2), caractérisé en ce que les moyens de transport comportent une chaîne sans fin (5) disposée en-dessous du film perforé et s'étendant transversalement au film perforé, une série de fourche de transport (7) montées en porte à faux par rapport à la chaîne sans fin (5) et des moyens d'entraînement pas à pas (25) des fourches (7), en ce que les moyens de positionnement (42) comportent un vérin de positionnement (51) disposé parallèlement à l'axe des fourches (7) et un conduit de positionnement (53) vertical ayant une ouverture latérale en regard du vérin de positionnement (51) et une paroi interne épousant partiellement un contour externe des embouts (1) et en ce que les moyens d'engagement (56) comprennent un vérin d'engagement (57) disposé en regard du conduit de positionnement (52) endessous de celui-ci et comportant une tige (58) portant une plaque de poussée (54) ayant un contour semblable à la paroi interne du conduit de positionnement (53).

2. Dispositif selon la revendication 1, caractérisé en ce que les moyens d'entraînement pas à pas (25) comprennent un vérin d'entraînement (26) comportant une tige (27) qui supporte un sabot (28) disposé en regard d'un côté des fourches de transport (7).

3. Dispositif selon la revendication 2, caractérisé en ce que le sabot (28) comporte une partie biseautée (31) sur un bord arrière par rapport à un sens de déplacement de la chaîne (5) et en ce que chaque fourche de transport (7) comporte une partie biseautée (32) inserve de la partie biseautée (31) du sabot (28).

4. Dispositif selon la revendication 1, caractérisé en ce qu'il comporte des moyens (36) de détection de fourche adjacents aux moyens de positionnement (42) et des moyens de blocage (44) de la chaîne (5) reliés aux moyens de détection de fourche.

5. Dispositif selon la revendication 4, caractérisé en ce que les moyens de blocage (44) comprennent un électro-aimant (45) disposé en regard d'une pièce de blocage (46) en matériau magnétique portée par un pignon de renvoi (6) de la chaîne sans fin (5), la pièce de blocage (46) étant reliée au pignon de renvoi (6) par l'intermédiaire d'un bague élastique (47) fixé en des points alternés au pignon de renvoi (6) et à la pièce de blocage (46).

**Patentansprüche**

1. Einrichtung zum Anbringen von Ventileinsätzen (1) an einer mit Durchtrittsöffnungen versehenen Folie (2), welche im wesentlichen horizontal angeordnet ist, wobei die Einrichtung Transportmittel (4) zum Zuführen der Ventileinsätze (1) bis in die Nähe der Folie umfaßt, ferner eine Positioniereinrichtung (42) zum Positionieren der Ventileinsätze (1) direkt vor den Durchtrittsöffnungen (3), und eine Einführeinrichtung (56) zum Einführen der Ventileinsätze in die Durchtrittsöffnungen (3) der Folie (2), dadurch gekennzeichnet,

das die Transportmittel eine endlose Kette (5) umfassen, die unterhalb der mit den Durchtrittssöffnungen versehenen Folie angeordnet ist und sich quer zu dieser erstreckt, ferner eine Reihe von an der endlosen Kette (5) frei abstehend angeordneten Trnasportgabeln (7), und eine Schrittschalteinrichtung (25) für diese Transportgabeln (7),

daß die Positioniereinrichtung (42) einen parallel zur Achse der Transportgabeln (7) angeordneten Positionierzylinder (51) umfaßt sowie eine vertikale Positionierführung (53) mit einer seitlichen, zum Stellzylinder (51) ausgerichteten Öffnung und einer Innenwandfläche, die sich teilweise an die Außenkontur der Ventileinsätze (1) anpaßt,

und daß die Einführeinrichtung (56) einen Einführzylinder (57) umfaßt, welcher unterhalb der Positionierführung (53) angeordnet ist und welcher eine Kolbenstange (58) mit einer Stoßplatte (54) aufweist, die eine der Innenwandfläche der Positionierführung (53) ähnliche Außenkontur hat.

2. Einrichtung nach Anspruch 1, dadurch gekennzeichnet, daß die Schrittschalteinrichtung (25) einen Schaltzylinder (26) umfaßt mit einer Kolbenstange (27), die einen auf eine Seite der jeweiligen Transportgabeln (7) wirkenden Betätigungsklotz (28) trägt.

3. Einrichtung nach Anspruch 2, dadurch gekennzeichnet, daß der Betätigungsklotz (28) an einer bezüglich der Verstellrichtung der Kette (5) hinteren Kante einen abgeschrägten Bereich (31) hat und daß jede der Transportgabeln (7) einen zum abgeschrägten Bereich (31) des Betätigungsklotzes (28) entegegengesetzt abgeschrägten Bereich (32) hat.

4. Einrichtung nach Anspruch 1, dadurch gekennzeichnet, daß sie im Bereich der Positioniereinrichtung (42) angeordnete Detektormittel (36) zum Feststellen der Gabeln (7) und mit den Detektormitteln verbundene Mittel (44) zum Arretieren der Kette (5) aufweist.

5. Einrichtung nach Anspruch 4, dadurch gekennzeichnet, daß die Mittel (44) zum Arretieren einen Elektromagneten (45) umfassen, welcher mit einem von einer Umlenkrolle (6) für die endlose Kette (5) gehaltenen Arretierteil (46) aus einem Magnetwerkstoff zusammenwirkt, wobei das Arretierteil (46) mit der Umlenktrolle (6) über einen elastischen Ring (47) verbunden ist, der in einander abwechselnden Befestigungspunkten jeweils einerseits an der Umlenkrolle (6) und andererseits an dem Arretierteil (46) befestigt ist.

**Claims**

1. A device for positioning fitments (1) on a perforated film (2) disposed in a substantially horizontal manner, said device including transporting means (4) for bringing said fitments (1) in the vicinity of said film, positioning means (42) for positioning said fitments straight below perforations (3), and engaging means (56) for pushing said fitments through said perforations (3) of said film (2), characterized in that said transport means include an endless chain (5) positioned below said perforated film and extending transversely to said perforated film, a series of transporting forks (7) mounted overhanging with respect to said endless chain (5) and step by step driving means (25) for said forks (7), in that said positioning means (42) include a positioning jack (51) mounted concurrently to an axis of said forks (7) and a positioning vertical duct (53) having a lateral opening facing said positioning jack (51) and an internal wall partially conformed to an external contour of said fitments (1), and in that said engaging means (56) include an engaging jack (57) positioned to face said positioning duct (52) below the same and comprising a rod (58) carrying a pushing plate (54) having a contour similar to the internal wall of said positioning duct.

2. A device according to claim 1, characterized in that the step by step driving means (25) include a driving jack (26) which has a stem (27) supporting a shoe (28) positioned to face one side of the transporting forks (7).

3. A device according to claim 2, characterized in that the shoe (28) has a bevelled portion (31) on a rear edge relative to a direction of movement of chain (5) and in that each transporting fork (7) has a bevelled portion (32) reversed relative to the bevelled portion (31) of shoe (28).

4. A device according to claim 1, characterized in that it includes fork detection means (36) adjacent to the positioning means (42) and blocking means (44) for chain (5) connected to the fork detection means.

5. A device according to claim 4, characterized in that the blocking means (44) include an electromagnet (45) positioned facing a blocking member (46) made of magnetic material, carried by a return pinion (6) for the endless chain (5), the blocking member (46) being connected to the return pinion (6) by an elastic ring (47) fixed in alternate points to the feed pinion (6) and to the blocking member (46).

Fig.1

Fig.2

Fig.3

Fig.4

Fig.5

Fig. 6

Fig. 8

*Fig. 7*